# EUROPÄISCHE PATENTSCHRIFT

(11) **EP 1 030 189 B1**
(45) Veröffentlichungstag und Bekanntmachung des Hinweises auf die Patenterteilung: **08.10.2003**
(21) Anmeldenummer: 00100973.7
(22) Anmeldetag: 19.01.2000
(51) Int. Cl.: G01S 11/14, B66B 1/34

(54) **Einrichtung zur Positionserfassung**
Device for position detection
Dispositif pour détecter la position

(30) Priorität: 29.01.1999 DE 19903645
(43) Veröffentlichungstag der Anmeldung: 23.08.2000
(73) Patentinhaber: K.A. SCHMERSAL GmbH & Co., D-42279 Wuppertal (DE)
(72) Erfinder: Hoepken, Hermann, 45549 Sprockhövel (DE)
(74) Vertreter: Sparing - Röhl - Henseler Patentanwälte

(56) Entgegenhaltungen:
- EP-A- 0 694 792
- DE-C- 965 203
- US-A- 3 696 328
- PATENT ABSTRACTS OF JAPAN vol. 010, no. 080 (P-441), 29. März 1986 (1986-03-29) & JP 60 218087 A (KOMATSU SEISAKUSHO KK), 31. Oktober 1985 (1985-10-31)
- PATENT ABSTRACTS OF JAPAN vol. 007, no. 278 (P-242), 10. Dezember 1983 (1983-12-10) & JP 58 156872 A (KAZUO OKADA;OTHERS: 01), 17. September 1983 (1983-09-17)

## Beschreibung

Die Erfindung betrifft eine Einrichtung zur Positionserfassung eines längs. einer vorgegebenen Strecke beweglichen Gegenstandes nach dem Oberbegriff des Anspruchs 1.

Aus EP-A-0 694 792 ist eine derartige Einrichtung zur Positionserfassung eines beweglichen Gegenstandes bekannt, die einen sich entlang eines Verfahrwegs erstreckenden Schallsignalleiter mit vorbestimmter, gleichmäßiger Schallausbreitungsgeschwindigkeit sowie einen mit einem Signalgeber verbundenen, an dem beweglichen Gegenstand befindlichen Signaleinkoppler zum Einkoppeln eines Schallsignals in den Schallsignalleiter aufweist. Hierbei sind an beiden Enden des Schallsignalleiters Signalauskoppler angeordnet, die jeweils mit einem Zähler verbunden sind, wobei die beiden Zähler über einen Taktgeber getaktet und mit einem Subtrahierer für die Ausgangssignale der beiden Zähler verbunden sind. Das Ausgangssignal des Subtrahierers ist als Maß für die Laufzeitdifferenz des eingekoppelten Schallsignals von der Einkopplungsstelle zu den Signalauskopplern von einer Auswerteeinheit zu einem Signal verarbeitbar, das für die momentane Position des beweglichen Gegenstandes auf dem Verfahrweg repräsentativ ist, wobei der Signaleinkoppler mit einer Signalabstandszeit arbeitet, die größer als die Schallaufzeit von einem Ende des Verfahrwegs zum anderen ist. Wenn der bewegliche Gegenstand still steht, können sich je nach Position des Gegenstandes infolge von Reflexionen des Schallsignals an den Enden des Schallsignalleiters stehende Wellen bilden, die zu Meßproblemen infolge von Amplitudenschwankungen führen.

Die JP-A-58-156872 betrifft eine Ultraschall-Abstandsmessvorrichtung, bei welcher ein Ultraschallimpuls von einem Sender abgestrahlt wird, sich durch ein Medium, wie z.B. Luft, ausbreitet, von einem Objekt reflektiert, und anschließend der reflektierte Ultraschallimpuls erfaßt wird, wobei die Zeitspanne zwischen Aussenden des Ultraschallimpulses und Empfangen des reflektierten Ultraschallimpulses ein Maß für die Entfernung zwischen der Ultraschall-Abstandsmessvorrichtung und dem Objekt ist. Um den Einfluß störender Sekundärreflektionen zu verhindern, ist vorgesehen, die Zeitspanne zwischen den Ultraschallimpulsen nach dem Zufallsprinzip zu variieren.

Aufgabe der Erfindung ist es, eine Einrichtung zur Positionserfassung eines längs einer vorgegebenen Strecke beweglichen Gegenstandes nach dem Oberbegriff des Anspruchs 1 zu schaffen, mit der es möglich ist, auch im Stillstand Meßwerte aufzunehmen.

Diese Aufgabe wird entsprechend dem kennzeichnenden Teil des Anspruchs 1 gelöst.

Durch Variation der Zeitabstände zwischen aufeinanderfolgenden, in den Schallsignalleiter eingespeisten Impulsen ist es möglich, auch bei ungünstigen Haltepositionen des beweglichen Gegenstandes gültige Meßwerte aufzunehmen, da hierbei durch Variation der Wiederholzeit die stehende Welle verschoben und somit eine Auswertung außerhalb von deren Schwingungsknoten ermöglicht wird.

Weitere Ausgestaltungen der Erfindung sind der nachfolgenden Beschreibung und den Unteransprüchen zu entnehmen.

Die Erfindung wird nachstehend anhand eines in den beigefügten Abbildungen schematisch dargestellten Ausführungsbeispiels näher erläutert.

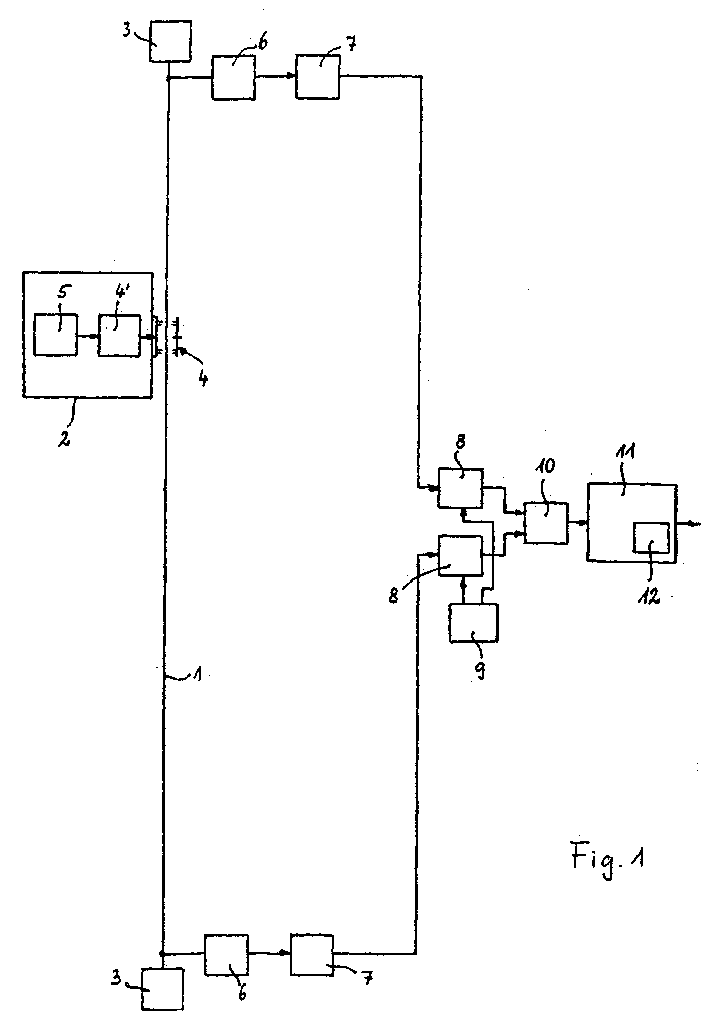

Fig. 1 zeigt schematisch eine Einrichtung zur Positionserfassung.
Fig. 2 zeigt ein Zeitschema bezüglich der Signale der Einrichtung von Fig. 1.

Die dargestellte Einrichtung zur Positionserfassung, die insbesondere zur Erfassung der Position eines Fahrstuhlkorbs verwendbar ist, umfaßt einen Schallsignalleiter 1, etwa eine Stahlschiene oder insbesondere einen Draht, der sich längs eines vorgegebenen Verfahrwegs erstreckt, längs dem ein beweglicher Gegenstand 2, etwa ein Fahrstuhlkorb, hin- und herbeweglich ist. Der Schallsignalleiter 1 mit vorbestimmter, gleichmäßiger Schallausbreitungsgeschwindigkeit ist an beiden Enden in einer dämpfenden Einspannung oder Halterung 3 gedämpft eingespannt bzw. gehalten.

Der bewegliche Gegenstand 2 trägt einen Signaleinkoppler 4, der mit einem Signalgeber 5, etwa einem Oszillator, über einen Signalanpassungskreis 4' verbunden ist. Der Signaleinkoppler 4, der insbesondere induktiv arbeitet, koppelt ein Schallsignal, das periodisch ein vom Signalgeber 5 empfangene Synchronisationsimpulse S umfaßt, in den Schallsignalleiter 1 ein. Die Synchronisationsimpulse S besitzen eine Taktzeit größer als die Laufdauer des Schallsignals von einem Ende des Schallsignalleiters 1 zu anderen.

Außerdem koppelt der Signaleinkoppler 4 Zusatzimpulse M ein, und zwar eine Vielzahl von Zusatzimpulsen M während jeder Taktzeit der Synchronisationsimpulse S. Die Taktzeit der Zusatzimpulse M ist derart, daß eine etwa zum Abbremsen und zum Anfahren einer genauen Position durch den Gegenstand 2 benötigte Distanzauflösung in Richtung des Verfahrwegs erreicht wird.

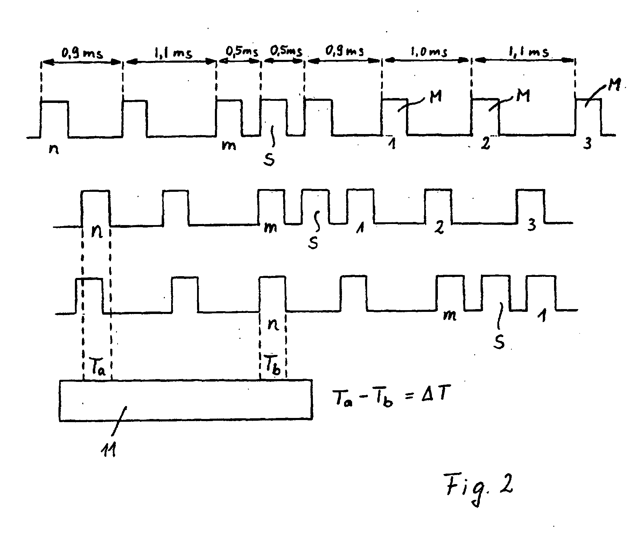

Die Synchronisationsimpulse S sind markiert, d.h. von den Zusatzimpulse M auswertemäßig unterscheidbar. Die Markierung kann beispielsweise dadurch erfolgen, daß ihre Taktzeit ein entsprechendes Vielfaches der Taktzeit der Zusatzimpulse M beträgt und sie bezüglich der Zusatzimpulse M zusätzlich, beispielsweise um eine halbe Taktzeit, zeitversetzt sind, vgl. die vom Signalgeber 5 erzeugte Impulsfolge der ersten Zeile von Fig. 2. Dann folgt einem Synchronisationsimpuls S jeweils eine vorbestimmte Anzahl von m Zusatzimpulsen M.

Die Markierung kann aber auch in anderer Weise vorgenommen werden, so können sich die Synchronisationsimpulse S von den Zusatzimpulsen M durch Modulation, Impulsbreite, Impulshöhe od.dgl. unterscheiden.

Bei den einzukoppelnden Synchronisations- und Zusatzimpulsen S, M kann es sich um kurze elektromagnetische Impulse, etwa einfache Pulse oder um Pulsfolgen, oder um eine periodische Frequenzumtastung handeln. Die Synchronisationsimpulse S werden dann eingesetzt, wenn der Verfahrweg sehr groß ist, etwa bei Aufzügen in vielgeschossigen Gebäuden, in welchem Fall die benötigte Distanzauflösung dazu führt, daß in den Schallsignalleiter 1 bereits neue Impulse eingekoppelt werden, bevor ein vorhergehender das Ende des Signalleiters 1 erreicht hat.

An den Enden des Schallsignalleiters 1 ist jeweils ein Signalauskoppler 6 angeordnet. Hierbei handelt es sich vorzugsweise um einen piezoelektrischen Signalauskoppler 6, jedoch können auch induktiv oder kapazitiv arbeitende verwendet werden.

Damit der Signalauskoppler 6 auch bei Stillstand des Gegenstandes 2 und damit des Signalgebers 5 in ungünstigen Haltepositionen hiervon ein auswertbares Signal aufnehmen kann und nicht in einem Schwingungsknoten einer durch Reflexion am Ende des Schallsignalleiters 1 entstandenen stehenden Welle arbeitet, werden, wie sich aus dem in Fig. 2 dargestellten, in den Schallsignalleiter 1 eingespeisten Signal ergibt, die Zusatzimpulse M mit variierenden Zeitabstand eingekoppelt. Der Zeitabstand der Zusatzimpulse M wird zweckmäßigerweise um einen Mittelwert von beispielsweise 1,0 ms um beispielsweise 0,1 ms gejittert. Diese Variation kann in einer vorbestimmten Reihenfolge oder auch zufällig und vorzugsweise mit einer vorbestimmten Schwankungsbreite um den Mittelwert stattfinden.

Jeder Signalauskoppler 6 ist mit einer Signalanpassungsschaltung 7 verbunden, deren Ausgangsleitungen jeweils zu einem Zähler 8 führen. Beide Zähler 8 werden von einem Taktgeber 9, einem Oszillator, getaktet. Die Taktzeit des Taktgebers 9 ist erheblich niedriger als die Laufzeit des Schalls von einem Ende des Schallsignalleiters 1 zum anderen und entsprechend der gewünschten Meßstreckenauflösung gewählt. Die Ausgänge der Zähler 8 werden einem Subtrahierer 10 zugeführt, der die Differenz der Ausgangssignale der Zähler 8 bildet und einer Auswerteeinheit 11, etwa einem Mikroprozessor, zuführt, wo das Ausgangsignal des Subtrahierers 10 ausgewertet wird.

Die Synchronisationsimpulse S dienen dazu, der Auswerteeinheit 11 anzuzeigen, welche nachfolgenden Zusatzimpulspaare zueinander gehören, nämlich die nach dem jeweiligen Synchronisationsimpuls S jeweils n-ten, d.h. ersten, zweiten, dritten usw. an den beiden Signalauskopplern 6 (in Fig. 2 mit A und B bezeichneten) zu unterschiedlichen Zeiten Tₐ und T_{b} einkommenden Zusatzimpulse M, damit die Auswerteeinheit 11 die zugehörige absolute Zeitdifferenz Tₐ- T_{b} = ΔT zwischen zusammengehörenden Zusatzimpulsen M und damit die Position des Gegenstandes 2 erfassen bzw. bestimmen kann. Das Jittern der Zusatzimpulse M hat hierauf keinen Einfluß, da die Zeitdifferenz absolut ist.

Die Auswertung zur Positionserfassung erfolgt primär in bezug auf die Zusatzsignale M, allerdings können auch die Synchronisations impulse S diesbezüglich ausgewertet werden, und zwar vor allem, aber nicht nur dann, wenn der jeweils m-te Zusatzimpulse besonders markiert ist, um so als Synchronisationsimpuls S zu dienen.

Befindet sich der bewegliche Gegenstand 2 in der Mitte zwischen den Signalauskopplern 6, sind die Ausgänge der Zähler 8 gleich und ihre Differenz null. Befindet sich der Gegenstand 2 (bei vertikaler Strecke) oberhalb der Mitte, ist der Ausgang des an den oberen Signalauskoppler 6 angeschlossenen Zählers 8 kleiner als die des anderen. Aus der vom Subtrahierer 10 ermittelten Laufzeitdifferenz der zueinander gehörenden Zusatzimpulse M im Schallsignalleiter 1 und der bekannten Schallgeschwindigkeit in diesem ergibt sich die Entfernung des beweglichen Gegenstandes 2 von der Mitte. Da dann, wenn sich der bewegliche Gegenstand 2 unterhalb der Mitte befinden würde, die Differenz ein anderes Vorzeichen haben würde, ist auch bekannt, ob sich der beweglichen Gegenstand 2 oberhalb oder unterhalb der Mitte befindet, d.h. damit ist die genaue Lage des beweglichen Gegenstandes 2 errechenbar. Ein so von der Auswerteeinheit 11 erzeugbares, digitales oder analoges Positionssignal kann zur Nachfolgesteuerung verwendet werden.

Ein Watchdog 12 (Überwachungsschaltung) der Auswerteeinheit 11 kann zur einfachen Überwachung der Meßstrecke bei einer zeitkonstanten Einkopplung des Einkoppelsignals verwendet werden. Bei einer Verschmutzung, die in der Lage ist, das Signal auf dem Schallsignalleiter 1 zu bedämpfen, überschreitet die vom Subtrahierer 10 festgestellte Differenz einen vorbestimmten Wert, auf die der Watchdog 12 anspricht, um ein entsprechendes Warnsignal od.dgl. auszulösen.

Die Schallgeschwindigkeit in einem Schallsignalleiter 1 aus Stahl liegt bei etwa 5300 m/s. Bei einer zeitlichen Auflösung von 188 ns, wozu eine Taktgeberfrequenz von 5,3 MHz notwendig ist, liegt die Ortsauflösung der Meßstrecke bei 1 mm.

Anstatt mit dem Signalgenerator verbunden zu sein, kann der Signaleinkoppler 4 auch von außen etwa durch die Auswerteeinheit 11 getriggert werden, um die Schallsignale in den Schallsignalleiter 1 einzukoppeln. Umgekehrt kann auch der Signaleinkoppler 4 über ein elektrisches Signal die Auswerteeinheit 11 triggem, um den zeitlichen Beginn des jeweiligen Einkoppelns des Schallsignals in den Schallsignalleiter 1 für die Auswertung durch die Auswerteeinheit 11 festzulegen.

Auch kann man gegebenenfalls mit nur einem Signalauskoppler 6 auskommen, anstatt an jedem Ende des Schallsignalleiters 1 jeweils einen Signalauskoppler 6 anzuordnen.

## Patentansprüche

1. Einrichtung zur Positionserfassung eines längs eines vorgegebenen Verfahrwegs beweglichen Gegenstandes (2), mit einem sich entlang des Verfahrwegs erstreckenden Schallsignalleiter (1) mit vorbestimmter, gleichmäßiger Schallausbreitungsgeschwindigkeit sowie mit einem an dem beweglichen Gegenstand (2) befindlichen Signaleinkoppler (4) zum Einkoppeln eines getakteten Schallsignals in den Schallsignalleiter (1), wobei an wenigstens einem Ende des Schallsignalleiters (1) ein Signalauskoppler (6) angeordnet ist, der mit einer Auswerteeinheit (11) zur Bestimmung der Laufzeit des eingekoppelten Schallsignals von der Einkopplungsstelle zu dem Signalauskoppler (6) und zur Erzeugung eines für die momentane Position des beweglichen Gegenstandes (2) auf dem Verfahrweg repräsentativen Signals verbunden sind, **dadurch gekennzeichnet, daß** der Signaleinkoppler (4) als Schallsignal benachbarte Impulse (M) mit variierendem Zeitabstand einkoppelt.

2. Einrichtung nach Anspruch 1, **dadurch gekennzeichnet, daß** der Zeitabstand von einem Mittelwert um einen konstanten Betrag nach oben und unten schwankt.

3. Einrichtung nach Anspruch 1 oder 2, **dadurch gekennzeichnet, daß** das Schallsignal Synchronisationsimpulse (S) mit einer Taktzeit, die größer als die Schallaufzeit von einem Ende des Verfahrwegs zum anderen ist, sowie eine Vielzahl dazwischen befindlicher Zusatzimpulse (M) einkoppelt, deren Zeitabstand zueinander variiert.

4. Einrichtung nach Anspruch 3, **dadurch gekennzeichnet, daß** die Synchronisationsimpulse (S) gegenüber den Zusatzimpulsen (M) markiert sind.

5. Einrichtung nach Anspruch 4, **dadurch gekennzeichnet, daß** der Takt der Synchronisationsimpulse (S) gegenüber demjenigen der Zusatzimpulsen (M) zeitversetzt ist.

6. Einrichtung nach einem der Ansprüche 3 bis 5, **dadurch gekennzeichnet, daß** die Synchronisationsimpulse (S) und die Zusatzimpulse (M) zur Bestimmung der Zeitlaufdifferenz der Auswerteeinheit (11) zugeführt werden.

7. Einrichtung nach einem der Ansprüche 1 bis 6, **dadurch gekennzeichnet, daß** der Ausgang des Signalauskopplers (6) an einen von einem Taktgeber (9) getakteten Zähler (8) gekoppelt ist.

8. Einrichtung nach Anspruch 7, **dadurch gekennzeichnet, daß** an jedem Ende des Schallsignalleiters (1) ein Signalauskoppler (6) angeordnet ist, wobei die Ausgärige der beiden Signalauskoppler (6) jeweils an einen Zähler (8) gekoppelt, die beiden Zähler (8) über einen Taktgeber (9) getaktet und mit einem Subtrahierer (10) für die Ausgangssignale der beiden Zähler (8) verbunden sind.

9. Einrichtung nach Anspruch 7 oder 8, **dadurch gekennzeichnet, daß** der Taktgeber (9) für den Zähler (8) mit einem für eine vorgesehene Meßstreckenauflösung notwendigen Mindestfrequenz arbeitet.

10. Einrichtung nach einem der Ansprüche 1 bis 9, **dadurch gekennzeichnet, daß** der Signalauskoppler (6) ein piezoelektrischer, kapazitiver oder induktiver Auskoppler ist.

11. Einrichtung nach einem der Ansprüche 1 bis 10, **dadurch gekennzeichnet, daß** der Schallsignalleiter (1) ein sich entlang des Verfahrwegs erstreckender metallischer Körper ist.

12. Einrichtung nach Anspruch 11, **dadurch gekennzeichnet, daß** der Schallsignalleiter (1) eine Metallschiene ist.

13. Einrichtung nach Anspruch 11, **dadurch gekennzeichnet, daß** der Schallsignalleiter (1) ein Draht ist.

14. Einrichtung nach einem der Ansprüche 1 bis 13, **dadurch gekennzeichnet, daß** der Signaleinkoppler (4) ein induktiver Einkoppler ist.

15. Einrichtung nach einem der Ansprüche 8 bis 14, **dadurch gekennzeichnet, daß** die Auswerteeinheit (11) eine Überwachungsschaltung (12) umfaßt, die ein Warnsignal auslöst, wenn die vom Subtrahierer (10) festgestellte Differenz einen vorbestimmten Wert überschreitet.

16. Einrichtung nach einem der Ansprüche 1 bis 15, **dadurch gekennzeichnet, daß** der bewegliche Gegenstand (2) ein Aufzugkorb ist.

17. Einrichtung nach einem der Ansprüche 1 bis 16, **dadurch gekennzeichnet, daß** der Signaleinkoppler (4) mit einem Signalgeber (5) verbunden ist.

18. Einrichtung nach einem der Ansprüche 1 bis 17, **dadurch gekennzeichnet, daß** der Signaleinkoppler (4) von außen, insbesondere durch die Auswerteeinheit (11) bzw. die Auswerteeinheit (11) vom Signaleinkoppler (4) triggerbar ist.

19. Einrichtung nach einem der Ansprüche 1 bis 18, **dadurch gekennzeichnet, daß** der Schallsignalleiter (1) an beiden Enden gedämpft gehalten ist.

## Claims

1. A device for detecting the position of an object (2) moving along a specified travel path, with a sound signal line (1) with a specified uniform sound propagation rate extending along the travel path, and with a signal input coupler (4) located at the moving object (2) for feeding a timed sound signal to the sound signal line (1), whereby a signal output coupler (6) is arranged at least at one end of the sound signal line (1), which is connected with an evaluation unit (11) for determining the transit time of the coupled sound signal from the coupling point to the signal output coupler (6) and for generating a representative signal for the instantaneous position of the moving object (2) on the travel path, **characterised in that** the signal input coupler (4) feeds in pulses (M) as a sound signal with a varied time interval.

2. Device according to Claim 1, **characterised in that** the time interval fluctuates up and down from a mean value by a constant amount.

3. Device according to Claim 1 or 2, **characterised in that** the sound signal consists of synchronisation pulses (S) with a cycle time which is greater than the sound transit time from one end of the travel path to the other, and feeds a plurality of additional pulses (M) present in between the time interval of which varies from each other.

4. Device according to Claim 3, **characterised in that** the synchronisation pulses (S) are marked in relation to the additional pulses (M).

5. Device according to Claim 4, **characterised in that** the cycle of the synchronisation pulses (S) is time-staggered in relation to those of the additional pulses (M).

6. Device according to one of the Claims 3 to 5, **characterised in that** the synchronisation pulses (S) and the additional pulses (M) are applied to determine the time transit difference of the evaluation unit (11).

7. Device according to one of the Claims 1 to 6, **characterised in that** the output of the signal coupler (6) is coupled to a counter (8) timed by a timer (9).

8. Device according to Claim 7, **characterised in that** a signal output coupler (6) is arranged at each end of the sound signal line (1), whereby the outputs of the two signal output couplers (6) are each coupled to a counter (8), the two counters (8) are timed by a timer (9) and connected to a subtractor (10) for the output signals of the two counters (8).

9. Device according to Claim 7 or 8, **characterised in that** the timer (9) operates for the counter (8) with a minimum frequency necessary for an envisaged measuring section.

10. Device according to one of the Claims 1 to 9, **characterised in that** the signal output coupler (6) is a piezoelectric capacitive or inductive output coupler.

11. Device according to one of the Claims 1 to 10, **characterised in that** the sound signal line (1) is a metallic body extending along the travel path.

12. Device according to Claim 11, **characterised in that** the sound signal line (1) is a metal rail.

13. Device according to Claim 11, **characterised in that** the sound signal line (1) is a wire.

14. Device according to one of the Claims 1 to 13, **characterised in that** the signal input coupler (4) is an inductive input coupler.

15. Device according to one of the Claims 8 to 14, **characterised in that** the evaluation unit (11) comprises a monitoring circuit (12) which releases a warning signal when the difference determined by the subtractor (10) exceeds a specified value.

16. Device according to one of the Claims 1 to 15, **characterised in that** the moving object (2) is a lift basket.

17. Device according to one of the Claims 1 to 16, **characterised in that** the signal input coupler (4) is connected to a signalling device (5).

18. Device according to one of the Claims 1 to 17, **characterised in that** the signal input coupler (4) can be triggered from outside, especially by the evaluation unit (11) or the evaluation unit (11) by the signal input coupler (4).

19. Device according to one of the Claims 1 to 18, **characterised in that** the sound signal line (1) is kept damped at both ends.

## Revendications

1. Dispositif pour déterminer la position d'un objet mobile (2) le long d'un trajet de déplacement prédéterminé, comprenant un conducteur de signaux sonores (1) s'étendant le long du trajet de déplacement avec une vitesse de propagation du son régulière, prédéterminée, ainsi qu'un coupleur de signaux (4) se trouvant sur l'objet mobile (2), destiné à coupler un signal sonore cadencé dans le conducteur de signaux sonores (1), un découpleur de signaux (6) disposé à au moins une extrémité du conducteur de signaux (1) étant relié à une unité d'évaluation (11) pour déterminer le temps de parcours du signal sonore couplé depuis le point de couplage jusqu'au découpleur de signaux (6) et pour produire un signal représentatif de la position momentanée de l'objet mobile (2) sur le trajet de déplacement, **caractérisé en ce que** le coupleur de signaux (4) couple des impulsions successives (M) en tant que signal sonore avec un intervalle de temps variable.

2. Dispositif selon la revendication 1, **caractérisé en ce que** l'intervalle de temps par rapport à une valeur moyenne varie d'un montant constant vers le haut et vers le bas.

3. Dispositif selon la revendication 1 ou 2, **caractérisé en ce que** le signal sonore couple des impulsions de synchronisation (S) avec un temps de cycle qui est supérieur au temps de parcours du son d'une extrémité du trajet de déplacement à l'autre, ainsi qu'une pluralité d'impulsions supplémentaires (M) se trouvant entre elles, dont l'intervalle de temps varie l'un par rapport à l'autre.

4. Dispositif selon la revendication 3, **caractérisé en ce que** les impulsions de synchronisation (S) sont marquées par rapport aux impulsions supplémentaires (M).

5. Dispositif selon la revendication 4, **caractérisé en ce que** la cadence des impulsions de synchronisation (S) est décalée dans le temps par rapport à celle des impulsions supplémentaires (M).

6. Dispositif selon l'une des revendications 3 à 5, **caractérisé en ce que** les impulsions de synchronisation (S) et les impulsions supplémentaires (M) sont amenées à l'unité d'évaluation (11) pour déterminer la différence d'écoulement du temps.

7. Dispositif selon l'une des revendications 1 à 6, **caractérisé en ce que** la sortie du coupleur de signaux (6) est couplé à un compteur (8) cadencé par un générateur de synchronisation (9).

8. Dispositif selon la revendication 7, **caractérisé en ce qu'**un découpleur de signaux (6) est disposé à chaque extrémité du conducteur de signaux sonores (1), les sorties des deux découpleurs de signaux (6) étant couplées chacune à un compteur (8), les deux compteurs (8) étant cadencés par l'intermédiaire d'un générateur de synchronisation (9) et reliés à un soustracteur (10) pour les signaux de sortie des deux compteurs (8).

9. Dispositif selon la revendication 7 ou 8, **caractérisé en ce que** le générateur de synchronisation (9) pour le compteur (8) fonctionne avec une fréquence minimale nécessaire pour une précision de distance mesurée prévue.

10. Dispositif selon l'une des revendications 1 à 9, **caractérisé en ce que** le découpleur de signaux (6) est un découpleur piézo-électrique, capacitif ou inductif.

11. Dispositif selon l'une des revendications 1 à 10, **caractérisé en ce que** le conducteur de signaux sonores (1) est un corps métallique s'étendant le long du trajet de déplacement.

12. Dispositif selon la revendication 11, **caractérisé en ce que** le conducteur de signaux sonores (1) est un rail métallique.

13. Dispositif selon la revendication 11, **caractérisé en ce que** le conducteur de signaux sonores (1) est un fil métallique.

14. Dispositif selon l'une des revendications 1 à 13, **caractérisé en ce que** le coupleur de signaux (4) est un coupleur inductif.

15. Dispositif selon l'une des revendications 8 à 14, **caractérisé en ce que** l'unité d'évaluation (11) comprend un circuit de surveillance (12) qui déclenche un signal avertisseur lorsque la différence constatée par le soustracteur (10) dépasse une valeur prédéterminée.

16. Dispositif selon l'une des revendications 1 à 15, **caractérisé en ce que** l'objet mobile (2) est une cabine d'ascenseur.

17. Dispositif selon l'une des revendications 1 à 16, **caractérisé en ce que** le coupleur de signaux (4) est relié à un émetteur de signaux (5).

18. Dispositif selon l'une des revendications 1 à 17, **caractérisé en ce que** le coupleur de signaux (4) peut être déclenché de l'extérieur, en particulier par l'unité d'évaluation (11), ou l'unité d'évaluation (11) être déclenchée par le coupleur de signaux (4).

19. Dispositif selon l'une des revendications 1 à 18, **caractérisé en ce que** le conducteur de signaux sonores (1) est maintenu isolé aux deux extrémités.
